# EUROPÄISCHE PATENTSCHRIFT

(11) **EP 1 845 518 B1**
(45) Veröffentlichungstag und Bekanntmachung des Hinweises auf die Patenterteilung: **08.05.2013**
(21) Anmeldenummer: 07004487.0
(22) Anmeldetag: 05.03.2007
(51) Int. Cl.: G10L 15/26

(54) **System und Verfahren zur Qualitätsmessung eines Gesprächs**
System and method for measuring the quality of a conversation
Système et procédé destinés la mesure de la qualité d'une discussion

(30) Priorität: 11.04.2006 DE 102006017051
(43) Veröffentlichungstag der Anmeldung: 17.10.2007
(73) Patentinhaber: Vodafone Holding GmbH, 40213 Düsseldorf (DE)
(72) Erfinder: Hertle, Jochen, Dr., 85521 Ottobrunn (DE); Dimitrova, Anna, 40223 Düsseldorf (DE)
(74) Vertreter: Müller, Thomas

(56) Entgegenhaltungen:
- US-A1- 2005 010 411
- FEINBERG R A , KIM IK-SUK, ET AL.: "Operatinal Determinants of Caller Satisfaction in the Call Center" INTERNATIONAL JOURNAL SERVICE INDUSTRY MANAGEMENT, [Online] Bd. 11, Nr. 2, 2000, Seiten 131-141, XP002432101 Gefunden im Internet: URL:http://arno.unimaas.nl/show.cgi?fid=27 79> [gefunden am 2007-05-02]
- ATHANASELIS T ET AL: "ASR for emotional speech: Clarifying the issues and enhancing performance" NEURAL NETWORKS, ELSEVIER SCIENCE PUBLISHERS, BARKING, GB, Bd. 18, Nr. 4, Mai 2005 (2005-05), Seiten 437-444, XP004965789 ISSN: 0893-6080

## Beschreibung

Die vorliegende Erfindung betrifft ein System sowie ein Verfahren zur Qualitätsmessung wenigstens eines Gesprächs zwischen mindestens zwei Teilnehmern, wobei das Gespräch über wenigstens eine Kommunikationsverbindung in einem Kommunikationsnetzwerk geführt wird.

Es ist bereits bekannt, Qualitätsmessungen von Gesprächen, die ein externer Gesprächsteilnehmer mit einem Gesprächsteilnehmer eines Call-Centers führt, auf der Basis so genannter Audits, das heißt durch Mithören des Gesprächs, durchzuführen. Hierbei werden die Gespräche in der Regel stichprobenartig mitgehört. Diese bekannten Verfahren sind erstens sehr subjektiv, da die Bewertung von der persönlichen Einschätzung des Mithörenden abhängt. Zweites ist dieses bekannte Verfahren mit hohen Personalkosten verbunden. Deshalb ist eine Bewertung vieler Gespräche, beispielsweise eines Call-Centers, nur sehr schwierig realisierbar. Aber gerade bei großen Unternehmen, die ein Call-Center betreiben, ist bei der Implementierung von Unternehmenszielen in Richtung Kundenzufriedenheit die Optimierung des Call-Centers von entscheidender Bedeutung.

So ist aus der US 2005/010411 A1 ein System zur Qualitätsmessung von Gesprächen, die ein externer Gesprächsteilnehmer mit einem Gesprächsteilnehmer eines Call-Centers führt bekannt. Das System zur Qualitätsmessung umfasst eine Umwandlungseinrichtung zur Spracheingabe, eine Detektionseinrichtung zum Erkennen von Referenzsprachsignalen, eine Komparatoreinrichtung zum Vergleichen und zum Ermitteln von Übereinstimmungen sowie eine Ausgabevorrichtung.

Aufgabe der vorliegenden Erfindung ist es, ein kostengünstiges und einfaches Verfahren sowie ein System zur Qualitätsmessung von Gesprächen bereitzustellen, bei dem die vorstehend beschriebenen Nachteile vermieden werden können. Insbesondere soll eine Automatisierung der Qualitätsmessung von Gesprächen ermöglicht werden, damit eine objektive Messgrundlage für die Bewertung eines Gesprächs gewährleistet werden kann, und der Verlauf eines Gespräches soll besser bewertet bzw. die Analyse des Gespräches genauer durchgeführt werden können.

Diese Aufgabe wird erfindungsgemäß gelöst durch ein System zur Qualitätsmessung wenigstens eines Gesprächs zwischen mindestens zwei Teilnehmern mit den Merkmalen gemäß des unabhängigen Patentanspruchs 1 sowie durch ein Verfahren zur Qualitätsmessung wenigstens eines Gesprächs zwischen mindestens zwei Teilnehmern gemäß Patentanspruch 8. Weitere Vorteile, Merkmale, Details, Aspekte und Effekte der Erfindung ergeben sich aus den Unteransprüchen sowie der Beschreibung. Merkmale und Details, die im Zusammenhang mit dem erfindungsgemäßen System zur Qualitätsmessung beschrieben sind, gelten dabei selbstverständlich auch im Zusammenhang mit dem erfindungsgemäßen Verfahren zur Qualitätsmessung, und umgekehrt.

Die erfindungsgemäße Aufgabe wird durch ein System zur Qualitätsmessung wenigstens eines Gesprächs zwischen mindestens zwei Teilnehmern, wobei das Gespräch über wenigstens eine Kommunikationsverbindung in einem Kommunikationsnetzwerk geführt wird, wobei das System eine Umwandlungseinrichtung zum Umwandeln analoger Sprachsignale in digitale Sprachsignale, eine Detektionseinrichtung zum Erkennen/Erfassen von vorgegebenen Referenzsprachsignalen aus den digitalen Sprachsignalen, mit einer Komparatoreinrichtung zum Vergleichen der digitalen Sprachsignale mit Referenzsprachsignalen, die in zumindest einer Speichereinrichtung abgelegt sind, und zum Ermitteln von Übereinstimmungen zwischen digitalen Sprachsignalen und Referenzsprachsignalen, und eine Ausgabeeinrichtung zum Ausgeben von ermittelten übereinstimmenden Sprachsignalen aufweist, gelöst.

Ein derartiges System zur Qualitätsmessung wenigstens eines Gesprächs zwischen mindestens zwei Teilnehmern stellt ein kostengünstiges und einfaches System dar, die Qualität von Gesprächen zu beurteilen. Ferner ist durch ein derartiges System eine Automatisierung der Qualitätsmessung von Gesprächen möglich, um eine objektive Messgrundlage für die Bewertung eines Gesprächs oder einer Vielzahl von Gesprächen zu gewährleisten.

Das Kommunikationsnetzwerk bzw. Kommunikationsnetz stellt eine so genannte Ende-zu-Ende-Verbindung zwischen den Teilnehmern bzw. den Endgeräten der Teilnehmer zur Verfügung damit diese miteinander kommunizieren können. Das Kommunikationsnetz kann unterschiedliche räumliche Ausdehnung aufweisen. So kann es beispielsweise als ein lokales Netz (LAN), ein Anschlussnetze (AN), ein Stadtnetz (MAN), ein Weitverkehrsnetz (WAN), ein globales Netz (GAN), ein GSM-Netz oder als ein UMTS-Netz ausgebildet sein. Die Kommunikationsnetze können in ihrer physikalischen Struktur mit Funkwellen arbeiten, ebenso mit elektrischen Signalen auf drahtgebundenen Übertragungsmedien, über Lichtsignale in Lichtwellenleiter oder über Infrarotstrahlen bei Festverbindungen. Von der Vermittlungstechnik her dann das Kommunikationsnetz leitungsvermittelt, paketvermittelt oder zellenvermittelt arbeiten. In einer besonders vorteilhaften Ausführungsform ist das Kommunikationsnetz ein Mobilfunknetz der 2ten, 3ten oder 4ten Generation.

Das System zur Qualitätsmessung wenigstens eines Gesprächs zwischen mindestens zwei Teilnehmern weist eine Umwandlungseinrichtung zum Umwandeln analoger Sprachsignale in digitale Sprachsignale auf. Hierbei werden Analogsignale, deren Signalparameter eine Nachricht darstellen, die nur aus kontinuierlichen Funktionen besteht, in Digitalsignale, d.h. in Zeichen, umgewandelt, wobei jeweils ein Zeichen bestimmten Wertbereichen der Signalparameter entspricht.

Das System weist ferner eine Detektionseinrichtung zum Erkennen bzw. Erfassen von vorgegebenen Referenzsprachsignalen aus den digitalen Sprachsignalen auf. Die Referenzsprachsignale sind in einer dem System, insbesondere der Detektionseinrichtung, zugeordneten Speichereinrichtung abgelegt. Die Referenzsprachsignale können Wörter oder Begriffe sein. Beispielsweise können die Referenzsprachsignale bestimmte Schlüsselbegriffe, wie Namen von Produkten, Fragewörter, Höflichkeitsformeln, Name des Call-Center Mitarbeiters, Schimpfwörter, Namen von Konkurrenzprodukten, Konkurrenzfirmen, etc. sein. Die Referenzsprachsignale können aber auch bestimmte Schwellen- oder Grenzwerte, wie beispielsweise eine bestimmte Lautstärke oder Tonlage, sein.

Die Detektionseinrichtung zum Erkennen bzw. Erfassen von vorgegebenen Referenzsprachsignalen basiert auf dem System der Spracherkennung, wobei die Spracherkennung ein Verfahren der Sprachanalyse ist, bei dem ein computerbasiertes System mit automatischer Spracherkennung (ASR; ASR = Automatic Speech Recognition) die eingegebenen Sprachinformationen, d.h. die digitalen Sprachsignale, analysiert, und zwar in Bezug auf die gesprochenen Wörter, auf deren Bedeutung und in Bezug auf die charakteristischen Merkmale des Sprechers. Die automatische Spracherkennung stellt die technische Adaption der Sprachanalyse in Form der automatischen Interpretation von menschlicher Sprache dar. Die automatische Spracherkennung umfasst die Erkennung von Sprache, Schlüsselwörtern und Sätzen und deren Bedeutung, ebenso wie die Identifizierung eines Sprechers für sicherheitsrelevante Funktionen, wie die Zugriffsberechtigung oder die Autorisierung. Die Detektionseinrichtung zeichnet sich durch die Anzahl der eingespeicherten Referenzsprachsignalen, d.h. der Wörter, durch die Möglichkeit des Erlernens von Wörtern und durch die Treffsicherheit, aus.

Hierzu weist die Detektionseinrichtung eine Komparatoreinrichtung auf. In der Komparatoreinrichtung werden die digitalen Sprachsignale mit den gespeicherten Referenzsprachsignalen verglichen und Übereinstimmungen zwischen digitalen Sprachsignalen und Referenzsprachsignalen ermittelt.

Das System zur Qualitätsmessung wenigstens eines Gesprächs zwischen mindestens zwei Teilnehmern weist ferner eine Ausgabeeinrichtung zum Ausgeben von ermittelten übereinstimmenden Sprachsignalen auf. Die Ausgabeeinrichtung kann beispielsweise ein Display eines elektronischen Gerätes, wie eines Computers oder eines Mobiltelefons, oder aber eine Druckeinrichtung sein.

Durch ein derartiges System zur Qualitätsmessung wenigstens eines Gesprächs zwischen mindestens zwei Teilnehmern können so genannte Audits automatisiert werden, so dass eine objektive Messgrundlage für die Bewertung der Leistung oder der Zielerreichung eines Teilnehmers des Gespräches, insbesondere des Call-Center Mitarbeiters, gewährleistet ist.

Ein derartiges System ermöglicht beispielsweise den Betreibern von Call-Centern auf eine kostengünstige und einfache Art und Weise die Gespräche der Call-Center Mitarbeiter zu prüfen und entsprechend der Ergebnisse der Überprüfung Maßnahmen zur Verbesserung bzw. Schulungen der Call-Center Mitarbeiter durchzuführen. Ziel ist es, durch den Einsatz eines derartigen Systems die Kundenzufriedenheit zu erhöhen und die Qualität der Beratung zu erhöhen. So können beispielsweise die Ergebnisse, die durch den Vergleich der digitalen Sprachsignale eines oder mehrere Gespräche(s) mit den gespeicherten Referenzsprachsignalen ermittelt worden sind, als Basis für Bonussysteme bei der Bezahlung der Call-Center Mitarbeiter dienen.

Das System ermöglicht es den Betreibern eines Call-Centers den jeweiligen Call-Center Mitarbeitern komplexe Zielvorgaben vorzugeben, da die Umsetzung der Ziele einfach und effizient gemessen werden können.

Vorteilhafterweise weist das System eine Zeiterfassungseinrichtung zum Ermitteln der Dauer des geführten Gesprächs auf. Hierdurch ist es möglich einen Bezug zwischen der Anzahl und der Häufigkeit des Nennens ermittelter Wörter und der Länge des Gesprächs herzustellen. So kann eine ermittelte Höflichkeitsformel unterschiedlich interpretiert werden. Wird das Wort "bitte" einmal in einem Gespräch genannt, kann es in einem sehr kurzen Gespräch positiver gedeutet werden, als wenn das Gespräch sehr lange gedauert hat.

Besonders vorteilhaft ist es, dass die Zeiterfassungseinrichtung des Systems zur Verknüpfung der ermittelten übereinstimmenden Sprachsignale mit Zeitmarken ausgebildet ist, wobei die Zeitmarken in Abhängigkeit des Gesprächsbeginns gesetzt werden. Hierdurch ist eine exakte Zuordnung der ermittelten Sprachsignale bzw. der mit Referenzsignalen übereinstimmenden Sprachsignale zu dem Zeitablauf des Gesprächs möglich. Dies ist für die Bewertung des Gesprächs von hoher Bedeutung, da der Verlauf eines Gesprächs besser festgestellt werden kann. Durch das Versehen der ermittelten Übereinstimmungen mit Zeitmarken, kann bei der Analyse des Gesprächs genau festgestellt werden, ob ein Gespräch sich eher positiv oder eher negativ entwickelt hat. Werden am Ende des Gesprächs positiv zu bewertende Schlüsselbegriffe ermittelt, so kann auf eine gute Entwicklung des Gesprächs geschlossen werden. Die Kundenzufriedenheit sollte das Ziel eines jeden Gesprächs sein. Durch die Zuordnung von Zeitmarken zu den ermittelten übereinstimmenden Sprachsignalen kann die Kundenzufriedenheit in einem Gespräch leichter festgestellt werden.

In einer vorteilhaften Ausgestaltung ist bei dem System zur Qualitätsmessung wenigstens eines Gesprächs zwischen mindestens zwei Teilnehmern zusätzlich eine Analyseeinrichtung zur quantitativen Bewertung der ermittelten übereinstimmenden Sprachsignale vorgesehen ist. Durch die Analyseeinrichtung kann beispielsweise festgestellt werden wie häufig ein bestimmtes Wort in einem Gespräch gefallen ist. Die Analyseeinrichtung kann die gleichen Wörter eines Gespräches oder mehrerer Gespräche eines Call-Center Mitarbeiters oder verschiedener Call-Center Mitarbeiter aufsummieren. Die quantitative Bewertung kann auch Lautstärken ermitteln. Die Lautstärke kann beispielsweise in Dezibel ermittelt werden. Die Ergebnisse der quantitativen Bewertung können durch die Ausgabeeinrichtung angezeigt werden. Aufgrund der Analyseeinrichtung kann unter anderem festgestellt werden, ob ein Call-Center Mitarbeiter oder auch der Kunde eher so genannte freundliche/höfliche Worte, wie "bitte", "danke" "Guten Tag" etc., oder eher Schimpfwort benutzt.

Ferner kann das System zusätzlich eine Analyseeinrichtung zur qualitativen Bewertung der ermittelten übereinstimmenden Sprachsignale aufweisen. Im Gegenteil zur quantitativen Bewertung, wo es auf Häufigkeiten gefallener Worte eines Gespräches geht, kann eine qualitative Bewertung verschiedene andere Aspekte eines Gespräches analysieren. So kann die Analyseeinrichtung die Emotionalität eines Call-Center Mitarbeiters oder eines Kunden messen. Dies kann durch Ermittlung der Tonhöhe und die Modulation der Stimme erfolgen. Modulation ist die Veränderung von Signalparametern eines Trägers in Abhängigkeit von einem modulierenden Signal. Das Trägersignal ist dabei ein zeitabhängiges Signal, beispielsweise eine Trägerschwingung oder eine Pulskette, das in seiner Amplitude oder in seiner zeitlichen Relation durch das Aufprägen des Modulationssignals verändert wird.

Durch die qualitative Bewertung der Sprachsignale kann beispielsweise die Stimmung, die Gefühlslage eines Gesprächsteilnehmers festgestellt werden.

Durch die Analyseeinrichtung ist es möglich ein Gespräch zwischen zumindest zwei Teilnehmern quantitativ und/oder qualitativ zu bewerten. Neben der Feststellung der reinen Häufigkeit des Nennens von bestimmten Schlüsselwörtern und der Lautstärke der Stimme eines Gesprächsteilnehmers, können Stimmungsschwankungen, d.h. die Emotionalität der Gesprächsteilnehmer, ermittelt werden. Dies ist für die Beurteilung der Gesprächsteilnehmer besonders vorteilhaft, da die Häufigkeit des Nennens eines oder mehrere Schlüsselwörter alleine noch nicht aussagekräftig ist, um den Verlauf eines Gespräches zu analysieren.

Ein System zur Qualitätsmessung wenigstens eines Gesprächs zwischen mindestens zwei Teilnehmern, bei dem die Ausgabeeinrichtung zum Ausgeben von quantitativ und/oder qualitativ bewerteten übereinstimmenden Sprachsignalen ausgebildet ist, erleichtert die Analyse des Gesprächs erheblich. Ferner ist es vorteilhaft, wenn die Ausgabeeinrichtung des Systems zum Ausgeben von mit Zeitmarken versehenen übereinstimmenden Sprachsignalen ausgebildet ist. Hierdurch sieht der Betrachter der Ausgabeeinrichtung umgehend den Verlauf eines Gespräches. Die Bewertung eines Gesprächs lässt sich durch eine derartige Ausgabeeinrichtung erleichtern. Soll kann einem mit Referenzsignalen übereinstimmenden Sprachsignal eine Zeitangabe bei der Ausgabe zugeordnet werden.

Besonders bevorzugt ist ein System, bei dem eine Speichereinrichtung zum zumindest zeitweiligen Abspeichern der von der Ausgabeeinrichtung ausgegebenen und/oder bewerteten Sprachsignale vorgesehen ist. Hierdurch kann die Betrachtung der Ergebnisse einer Bewertung eines Gespräches zu einem beliebigen Zeitpunkt durchgeführt werden. Die Ergebnisse lassen sich jederzeit zur Schulung der Mitarbeiter verwenden. So können jedem einzelnen Call-Center Mitarbeiter die individuellen Stärken und Schwächen aufgezeigt werden.

Ein derartiges System, bei dem eine Rechnereinheit vorgesehen ist, die auf die in der Speichereinrichtung gespeicherten Sprachsignale zugreift und zur Erstellung statistischer und/oder auf wenigstens einen der Teilnehmer bezogene individuelle Ergebnisprotokolle ausgebildet ist, ermöglicht eine besonders effektive Bewertung einer Vielzahl von Gesprächen. So können beispielsweise alle Gespräche bzw. alle Bewertungen eines Call-Center Mitarbeiters über einen bestimmten Zeitraum gespeichert werden. Die gespeicherten Bewertungen können gemittelt werden, um eine Durchschnittsbewertung zu erlangen. Der Zugriff auf die gespeicherten übereinstimmenden Sprachsignale ermöglicht es statistische Ergebnisprotokolle zu bilden, um ein Urteil über die Qualität der Gespräche eines oder mehrerer Call-Center Mitarbeiter(s) zu fällen. Durch die Rechnereinheit können leicht Durchschnittswerte der gespeicherten Sprachsignale aufgestellt werden. Hierdurch lässt sich aussagen, ob ein Mitarbeiter eines Call-Centers sich im Schnitt eher freundlich oder eher unfreundlich dem Kunden gegenüber verhalten hat. Ferner kann über einen längeren Zeitraum die Beratungsqualität der Gespräche eines Call-Center Mitarbeiters ermittelt werden. Dies kann beispielsweise an der durchschnittlichen Häufigkeit der Nennung von produktspezifischen Schlüsselwörtern festgestellt werden.

Bevorzugt ist ferner ein System zur Qualitätsmessung wenigstens eines Gesprächs zwischen mindestens zwei Teilnehmern, bei dem das System Mittel zur Bearbeitung der Referenzsprachsignale aufweist. Hierdurch kann der Schwerpunkt der Qualitätsmessung variabel gestaltet werden. Über die Mittel zur Bearbeitung der Referenzsprachsignale können die Referenzsprachsignale verändert werden. D.h., Referenzsprachsignale können beispielsweise entfernt oder hinzugefügt werden. Ferner können durch die Mittel zur Bearbeitung der Referenzsprachsignale bestimmte Schwellen- oder Grenzwerte erhöht oder verringert werden.

Bevorzugt weist das System Mittel zur automatischen Verknüpfung von ausgegebenen und/oder bewerteten Sprachsignalen mit charakterisierenden Daten wenigstens eines der Teilnehmer auf. Hierdurch kann ein individueller Vergleich der Zielvorgaben eines Teilnehmers mit den realisierten Ergebnissen der bewerteten Gespräche durchgeführt werden. Es können jedem Teilnehmer eines Gespräches, insbesondere jedem Call-Center Mitarbeiter, unterschiedliche Referenzsprachsignale zugeordnet werden. So können Stärken und Schwächen eines Gesprächsteilnehmers gezielt ermittelt werden.

Das System zur Qualitätsmessung wenigstens eines Gesprächs zwischen mindestens zwei Teilnehmern speichert bevorzugt alle Daten so, dass sowohl statistische Auswertungen, als auch individuell zuordenbare Auswertungen möglich sind. Bevorzugt speichert das System zu jedem Gespräch, die Anfangszeit und die Endzeit, den Namen des Call-Center Mitarbeiters, den Namen des Kunden, sofern dieser bekannt ist, sowie die ermittelten Sprachsignale bzw. die übereinstimmenden Sprachsignale, die aus einem Vergleich der digitalen Sprachsignale und der gespeicherten Referenzsprachsignale ermittelt wurden.

Die Aufgabe wird ferner durch ein Verfahren zur Qualitätsmessung wenigstens eines Gesprächs zwischen mindestens zwei Teilnehmern, wobei das Gespräch über wenigstens eine Kommunikationsverbindung in einem Kommunikationsnetzwerk geführt wird, wobei das Verfahren durch folgende Schritte gekennzeichnet ist:
a) in einer Umwandlungseinrichtung werden analoge Sprachsignale in digitale Sprachsignale umgewandelt;
b) in einer Detektionseinrichtung werden aus den digitalen Sprachsignalen vorgegebene Referenzsprachsignale erkannt/erfasst, wobei in einer Komparatoreinrichtung digitale Sprachsignale mit den Referenzsprachsignalen, die in zumindest einer Speichereinrichtung abgelegt sind, verglichen werden und wobei Übereinstimmungen zwischen digitalen Sprachsignalen und Referenzsprachsignalen ermittelt werden;
c) in einer Ausgabeeinrichtung werden die ermittelten übereinstimmenden Sprachsignale ausgegeben;
gelöst.

In der Umwandlungseinrichtung werden analoge Sprachsignale in digitale Sprachsignale umgewandelt. So können Schalldruckänderungen eines analogen, stetigen und kontinuierlichen Audiosignals durch einen elektroakustischen Schallwandler, z.B. einem Mikrofon, in elektrische analoge Signale umgewandelt werden. Diese elektrischen analogen Signale werden dann in digitale Signale umgesetzt. D.h., die Analogsignale, deren Signalparameter eine Nachricht darstellen, die nur aus kontinuierlichen Funktionen besteht, werden in Digitalsignale, d.h. in Zeichen, umgewandelt, wobei jeweils ein Zeichen bestimmten Wertbereichen der Signalparameter entspricht.

In einem zweiten Schritt erkennt/erfasst die Detektionseinrichtung aus den digitalen Sprachsignalen vorgegebene Referenzsprachsignale. Die Referenzsprachsignale werden zuvor in einer dem System, insbesondere der Detektionseinrichtung, zugeordneten Speichereinrichtung abgelegt. Die Datenbank der Speichereinrichtung ist dynamisch veränderbar, d.h. sie kann durch Hinzufügung oder Entfernung von Referenzsprachsignale verändert werden. Als Referenzsprachsignale können Wörter oder Begriffe verwendet werden. Beispielsweise können die Referenzsprachsignale bestimmte Schlüsselbegriffe, wie Namen von Produkten, Fragewörter, Höflichkeitsformeln, Name des Call-Center Mitarbeiters, Schimpfwörter, Namen von Konkurrenzprodukten, Konkurrenzfirmen, etc. sein. Als Referenzsprachsignale können aber auch bestimmte Schwellen- oder Grenzwerte dienen. So kann eine bestimmte Lautstärke als Referenz dienen.

In der Detektionseinrichtung werden die digitalen Sprachsignale analysiert, und zwar in Bezug auf die gesprochenen Wörter, auf deren Bedeutung und in Bezug auf die charakteristischen Merkmale des Sprechers. In der Komparatoreinrichtung werden die digitalen Sprachsignale mit den gespeicherten Referenzsprachsignalen verglichen und Übereinstimmungen zwischen digitalen Sprachsignalen und Referenzsprachsignalen ermittelt.

In der Ausgabeeinrichtung werden die ermittelten übereinstimmenden Sprachsignale ausgeben. Die Ausgabe erfolgt auf einem Display oder durch eine Druckeinrichtung.

In einem weiteren vorteilhaften Schritt wird bei dem Verfahren zur Qualitätsmessung die Dauer des geführten Gesprächs ermittelt. Dies erfolgt in einer Zeiterfassungseinrichtung. Durch die Messung der Dauer eines Gespräches können Rückschlüsse auf das Verhalten des Call-Center Mitarbeiters gemacht werden. Hat ein Call-Center Mitarbeiters immer nur kurze Gespräche, kann es sein, dass er nicht intensiv genug auf sein Gegenüber eingeht. Ein Call-Center Mitarbeiter der nur sehr lange Gespräche führt, telefoniert eventuell nicht effektiv.

Durch die Zeiterfassungseinrichtung wird einen Bezug zwischen der Anzahl und der Häufigkeit des Nennens ermittelter Wörter und der Länge des Gesprächs hergestellt. So kann ein ermittelter Schlüsselbegriff unterschiedlich interpretiert werden. Wird der Name eines bestimmten anzupreisenden Produktes einmal in einem Gespräch genannt, wird dies in einem sehr kurzen Gespräch positiver gedeutet, als wenn das Gespräch sehr lange gedauert hat.

In einem weiteren bevorzugten Schritt des Verfahrens werden in einer Zeiterfassungseinrichtung die ermittelten übereinstimmenden Sprachsignale mit Zeitmarken verknüpft, wobei die Zeitmarken in Abhängigkeit des Gesprächsbeginns gesetzt werden. Hierdurch wird eine exakte Zuordnung der ermittelten Sprachsignale bzw. der mit Referenzsignalen übereinstimmenden Sprachsignale zu dem Zeitablauf des Gesprächs geschaffen. Durch die Verknüpfung der ermittelten übereinstimmenden Sprachsignale mit Zeitmarken kann der Verlauf eines Gesprächs nachvollzogen werden, d.h., es wird festgestellt, ob ein Gespräch sich eher positiv oder eher negativ entwickelt. Werden am Ende des Gesprächs negativ zu bewertende Schlüsselbegriffe ermittelt, so kann auf eine schlechte Entwicklung des Gesprächs geschlossen werden.

Bevorzugt werden in einem weiteren Schritt des Verfahrens, in einer Analyseeinrichtung eine quantitative und/oder eine qualitative Bewertung der ermittelten übereinstimmenden Sprachsignale durchgeführt. Durch die quantitative und/oder qualitative Bewertung der ermittelten übereinstimmenden Sprachsignale in der Analyseeinrichtung ist es möglich jedem Gesprächsteilnehmer, d.h. dem Anrufer und dem Angerufenen, einzelnen Gesprächsmerkmale zuzuordnen. D.h., die Analyseeinrichtung ist in der Lage festzustellen, ob der Call-Center Mitarbeiter oder der Kunde ein bestimmtes Wort gesagt hat.

In der Analyseeinrichtung wird beispielsweise festgestellt, wie häufig ein bestimmtes Wort in einem Gespräch gefallen ist. Die Analyseeinrichtung summiert die gleichen Wörter eines Gespräches oder mehrerer Gespräche eines Call-Center Mitarbeiters oder verschiedener Call-Center Mitarbeiter auf. Die Ergebnisse der quantitativen Bewertung werden durch die Ausgabeeinrichtung angezeigt. Durch die Analyseeinrichtung wird beispielsweise festgestellt, ob ein Call-Center Mitarbeiter oder auch der Kunde eher so genannte freundliche/höfliche Worte, wie "bitte", "danke" "Guten Tag" etc., oder eher Schimpfwort benutzt. Bei der quantitativen Bewertung der Sprachsignale kann beispielsweise auch die Lautstärke in Dezibel ermittelt werden.

Die Analyseeinrichtung misst in einem weiteren Schritt die Emotionalität eines Call-Center Mitarbeiters oder eines Kunden. Dies erfolgt beispielsweise durch Ermittlung von Daten, welche aus der Analyse des Tonsignals gewonnen werden und welche Rückschlüsse auf den emotionalen Zustand eines Gesprächsteilnehmers geben. Hierzu kann beispielsweise der Lautstärkenverlauf innerhalb des Gespräches oder innerhalb eines Wortes erfasst werden. Ferner kann die Emotionalität durch eine Frequenzanalyse des Tonsignals, d.h. durch Feststellung hoher oder tiefer Frequenzen, ermittelt werden. Die Emotionalität eines Call-Center Mitarbeiters oder eines Kunden kann durch die Ermittlung der Tonhöhe und durch die Modulation der Stimme erfolgen. Durch die qualitative Bewertung der Sprachsignale wird beispielsweise die Stimmung bzw. die Gefühlslage eines Gesprächsteilnehmers festgestellt. Durch ein derartiges Verfahren kann erkannt werden, ob beispielsweise der Kunde mit einer Beschwerde das Gespräch beginnt und am Ende des Gespräches zufrieden ist oder umgekehrt, der Kunde ein Gespräch freundlich beginnt und am Ende erbost ist.

Das zuvor beschriebene Verfahren kann in einem weiteren bevorzugten Schritt die quantitativ und/oder qualitativ bewerteten übereinstimmenden Sprachsignale in der Ausgabeeinrichtung ausgeben. Ferner kann die Ausgabeeinrichtung mit Zeitmarken versehene übereinstimmende Sprachsignale ausgeben. Durch eine geeignete Darstellung der Ergebnisse lässt sich einfach und schnell eine Beurteilung durchführen. Insbesondere durch die Verknüpfung von mit Referenzsignalen übereinstimmenden Sprachsignalen mit Zeitmarken kann leicht erkannt werden, wie ein Gespräch verlaufen ist.

Vorteilhaft ist ein Verfahren, bei dem von der Ausgabeeinrichtung ausgegebene und/oder bewertete Sprachsignale zumindest zeitweilig in einer Speichereinrichtung abgespeichert werden. Hierdurch kann die Betrachtung der Ergebnisse einer Bewertung eines Gespräches zu einem beliebigen Zeitpunkt durchgeführt werden. Ferner ist ein Verfahren bevorzugt, bei dem eine Rechnereinheit auf die in der Speichereinrichtung gespeicherten Sprachsignale zugreift und statistische und/oder auf wenigstens einen der Teilnehmer bezogene individuelle Ergebnisprotokolle erstellt. Hierdurch wird eine besonders effektive Bewertung einer Vielzahl von Gesprächen ermöglicht. Die Rechnereinheit kann die gespeicherten Bewertungen mitteln, um eine Durchschnittsbewertung beispielsweise eines Call-Center Mitarbeiters zu erhalten. Durch den Zugriff der Rechnereinheit auf die gespeicherten übereinstimmenden Sprachsignale kann beispielsweise über einen längeren Zeitraum die Beratungsqualität der Gespräche eines Call-Center Mitarbeiters ermittelt werden. Hierdurch lässt sich aussagen, ob ein Mitarbeiter eines Call-Centers sich im Schnitt eher freundlich oder eher unfreundlich dem Kunden gegenüber verhalten hat.

Vorteilhaft ist ein Verfahren, bei dem die Referenzsprachsignale bearbeitet werden oder werden können. Hierdurch wird eine dynamische Datenbank erzeugt. Bei der Bewertung kann auf ein oder mehrere Referenzsprachsignale zurückgegriffen werden. Die Datenbank kann durch das Entfernen oder Hinzufügen von Referenzsprachsignalen verändert werden. Ferner können Schwellen- oder Grenzwerte, wie beispielsweise die Tonhöhe oder die Lautstärke, verändert werden.

Besonders vorteilhaft ist ein Verfahren zur Qualitätsmessung, bei dem ausgegebene und/oder bewertete Sprachsignale automatisch mit charakterisierenden Daten wenigstens eines der Teilnehmer verknüpft werden. Dies schafft eine direkt schnelle Überprüfung der Qualität eines Gesprächs eines Teilnehmers.

## Patentansprüche

1. System zur Qualitätsmessung wenigstens eines Gesprächs zwischen mindestens zwei Teilnehmern, wobei das Gespräch über wenigstens eine Kommunikationsverbindung in einem Kommunikationsnetzwerk geführt wird, aufweisend eine Umwandlungseinrichtung zum Umwandeln analoger Sprachsignale in digitale Sprachsignale; eine Detektionseinrichtung zum Erkennen/Erfassen von vorgegebenen Referenzsprachsignalen aus den digitalen Sprachsignalen, mit einer Komparatoreinrichtung zum Vergleichen der digitalen Sprachsignale mit Referenzsprachsignalen, die in zumindest einer Speichereinrichtung abgelegt sind, und zum Ermitteln von Übereinstimmungen zwischen digitalen Sprachsignalen und Referenzsprachsignalen; und eine Ausgabeeinrichtung zum Ausgeben von ermittelten übereinstimmenden Sprachsignalen sowie eine Zeiterfassungseinrichtung zum Ermitteln der Dauer des geführten Gesprächs, **dadurch gekennzeichnet, dass** die Zeiterfassungseinrichtung zur Verknüpfung der ermittelten übereinstimmenden Sprachsignale mit Zeitmarken ausgebildet ist, wobei die Zeitmarken in Abhängigkeit des Gesprächsbeginns gesetzt werden.

2. System nach Anspruch 1, **dadurch gekennzeichnet, dass** zusätzlich eine Analyseeinrichtung zur quantitativen Bewertung der ermittelten übereinstimmenden Sprachsignale und/oder zusätzlich eine Analyseeinrichtung zur qualitativen Bewertung der ermittelten übereinstimmenden Sprachsignale vorgesehen ist.

3. System nach Anspruch 2, **dadurch gekennzeichnet, dass** die Ausgabeeinrichtung zum Ausgeben von quantitativ und/oder qualitativ bewerteten übereinstimmenden Sprachsignalen und/oder dass die Ausgabeeinrichtung zum Ausgeben von mit Zeitmarken versehenen übereinstimmenden Sprachsignalen ausgebildet ist.

4. System nach einem der Ansprüche 1 bis 3, **dadurch gekennzeichnet, dass** eine Speichereinrichtung zum zumindest zeitweiligen Abspeichern der von der Ausgabeeinrichtung ausgegebenen Sprachsignale vorgesehen ist und dass eine Rechnereinheit vorgesehen ist, die auf die in der Speichereinrichtung gespeicherten Sprachsignale zugreift und zur Erstellung statistischer und/oder auf wenigstens einen der Teilnehmer bezogene individuelle Ergebnisprotokolle ausgebildet ist.

5. System nach einem der Ansprüche 2 bis 3, **dadurch gekennzeichnet, dass** eine Speichereinrichtung zum zumindest zeitweiligen Abspeichern der von der Ausgabeeinrichtung bewerteten Sprachsignale vorgesehen ist und dass eine Rechnereinheit vorgesehen ist, die auf die in der Speichereinrichtung gespeicherten Sprachsignale zugreift und zur Erstellung statistischer und/oder auf wenigstens einen der Teilnehmer bezogene individuelle Ergebnisprotokolle ausgebildet ist.

6. System nach einem der Ansprüche 1 bis 4, **dadurch gekennzeichnet, dass** das System Mittel zur Bearbeitung der Referenzsprachsignale aufweist und/oder dass Mittel zur automatischen Verknüpfung von ausgegebenen Sprachsignalen mit charakterisierenden Daten wenigstens eines der Teilnehmer vorgesehen sind.

7. System nach einem der Ansprüche 2, 3 und 5, **dadurch gekennzeichnet, dass** das System Mittel zur Bearbeitung der Referenzsprachsignale aufweist und/oder dass Mittel zur automatischen Verknüpfung von bewerteten Sprachsignalen mit charakterisierenden Daten wenigstens eines der Teilnehmer vorgesehen sind.

8. Verfahren zur Qualitätsmessung wenigstens eines Gesprächs zwischen mindestens zwei Teilnehmern, wobei das Gespräch über wenigstens eine Kommunikationsverbindung in einem Kommunikationsnetzwerk geführt wird, wobei in einer Umwandlungseinrichtung analoge Sprachsignale in digitale Sprachsignale umgewandelt werden,
wobei in einer Detektionseinrichtung aus den digitalen Sprachsignalen vorgegebene Referenzsprachsignale erkannt/erfasst werden, wobei in einer Komparatoreinrichtung digitale Sprachsignale mit den Referenzsprachsignalen, die in zumindest einer Speichereinrichtung abgelegt sind, verglichen werden und wobei Übereinstimmungen zwischen digitalen Sprachsignalen und Referenzsprachsignalen ermittelt werden;
wobei in einer Ausgabeeinrichtung die ermittelten übereinstimmenden Sprachsignale ausgegeben werden,
und wobei in einer Zeiterfassungseinrichtung die Dauer des geführten Gesprächs ermittelt wird,
**gekennzeichnet durch** folgenden Schritt:
dass in der Zeiterfassungseinrichtung die ermittelten übereinstimmenden Sprachsignale mit Zeitmarken verknüpft werden, wobei die Zeitmarken in Abhängigkeit des Gesprächsbeginns gesetzt werden.

9. Verfahren nach Anspruch 8, **dadurch gekennzeichnet, dass** zusätzlich eine Analyseeinrichtung vorgesehen ist, in welcher eine quantitative Bewertung der ermittelten übereinstimmenden Sprachsignale und/oder dass zusätzlich eine Analyseeinrichtung vorgesehen ist, in welcher eine qualitative Bewertung der ermittelten übereinstimmenden Sprachsignale durchgeführt wird.

10. Verfahren nach Anspruch 9, **dadurch gekennzeichnet, dass** die Ausgabeeinrichtung quantitativ und/oder qualitativ bewertete übereinstimmende Sprachsignale ausgibt, insbesondere mit Zeitmarken versehene übereinstimmende Sprachsignale ausgibt.

11. Verfahren nach einem der Ansprüche 8 bis 10, **dadurch gekennzeichnet, dass** von der Ausgabeeinrichtung ausgegebene Sprachsignale zumindest zeitweilig in einer Speichereinrichtung abgespeichert werden und dass eine Rechnereinheit vorgesehen ist, die auf die in der Speichereinrichtung gespeicherten Sprachsignale zugreift und die statistische und/oder auf wenigstens einen der Teilnehmer bezogene individuelle Ergebnisprotokolle erstellt.

12. Verfahren nach einem der Ansprüche 9 bis 10, **dadurch gekennzeichnet, dass** von der Ausgabeeinrichtung bewertete Sprachsignale zumindest zeitweilig in einer Speichereinrichtung abgespeichert werden und dass eine Rechnereinheit vorgesehen ist, die auf die in der Speichereinrichtung gespeicherten Sprachsignale zugreift und die statistische und/oder auf wenigstens einen der Teilnehmer bezogene individuelle Ergebnisprotokolle erstellt.

13. Verfahren nach einem der Ansprüche 8 bis 11, **dadurch gekennzeichnet, dass** die Referenzsprachsignale bearbeitet werden oder werden können und dass ausgegebene Sprachsignale automatisch mit charakterisierenden Daten wenigstens eines der Teilnehmer verknüpft werden.

14. Verfahren nach einem der Ansprüche 9, 10 und 12, **dadurch gekennzeichnet, dass** die Referenzsprachsignale bearbeitet werden oder werden können und dass bewertete Sprachsignale automatisch mit charakterisierenden Daten wenigstens eines der Teilnehmer verknüpft werden.

## Claims

1. System for measuring the quality of at least one conversation between at least two participants, wherein the conversation is conducted through at least one communications connection in a communications network, comprising a converting device for converting analogue speech signals into digital speech signals; a detecting device for recognising/detecting predetermined reference speech signals from the digital speech signals, with a comparator device for comparing the digital speech signals with reference speech signals which are stored in at least one memory device, and for detecting conformances between digital speech signals and reference speech signals; and an emitting device for emitting conforming speech signals that have been detected and a time recording device for determining the duration of the conversation conducted, **characterised in that** the time recording device is embodied to link the conforming speech signals that have been detected with time markers, the time markers being set as a function of the start of the conversation.

2. System according to claim 1, **characterised in that** in addition an analyser is provided for quantitatively evaluating the conforming speech signals that have been detected and/or in addition an analyser is provided for qualitatively evaluating the conforming speech signals that have been detected.

3. System according to claim 2, **characterised in that** the emitting device is embodied to emit conforming speech signals that have been evaluated quantitatively and/or qualitatively and/or **in that** the emitting device is embodied to emit conforming speech signals provided with time markers.

4. System according to one of claims 1 to 3, **characterised in that** a memory device is provided for at least temporarily storing the speech signals emitted by the emitting device and **in that** a computer unit is provided which accesses the speech signals stored in the memory device and is embodied to generate statistical results protocols and/or individual results protocols relating to at least one of the participants.

5. System according to one of claims 2 to 3, **characterised in that** a memory device is provided for at least temporarily storing the speech signals evaluated by the emitting device and **in that** a computer unit is provided which accesses the speech signals stored in the memory device and is embodied to generate statistical results protocols and/or individual results protocols relating to at least one of the participants.

6. System according to one of claims 1 to 4, **characterised in that** the system comprises means for processing the reference speech signals and/or means are provided for automatically linking speech signals that have been emitted with characterising data of at least one of the participants.

7. System according to one of claims 2, 3 and 5, **characterised in that** the system comprises means for processing the reference speech signals and/or **in that** means are provided for automatically linking the evaluated speech signals with characterising data of at least one of the participants.

8. Method of measuring the quality of at least one conversation between at least two participants, wherein the conversation is conducted through at least one communications connection in a communications network,
wherein analogue speech signals are converted into digital speech signals in a converting device,
wherein predetermined reference speech signals are recognised/detected from the digital speech signals in a detecting device, wherein digital speech signals are compared, in a comparator device, with the reference speech signals, which are stored in at least one memory device, and wherein conformances between digital speech signals and reference speech signals are determined;
wherein the conforming speech signals that have been detected are emitted in an emitting device,
and wherein the duration of the conversation conducted is determined in a time recording device,
**characterised by** the following step:
in the time recording device the conforming speech signals that have been detected are linked to time markers, the time markers being set as a function of the start of the conversation.

9. Method according to claim 8, **characterised in that** an analyser is additionally provided in which quantitative evaluation of the conforming speech signals that have been detected is carried out, and/or an analyser is additionally provided in which qualitative evaluation of the conforming speech signals that have been detected is carried out.

10. Method according to claim 9, **characterised in that** the emitting device emits conforming speech signals that have been quantitatively and/or qualitatively evaluated, particularly conforming speech signals provided with time markers.

11. Method according to one of claims 8 to 10, **characterised in that** speech signals emitted by the emitting device are at least temporarily stored in a memory device and **in that** a computer unit is provided which accesses the speech signals stored in the memory device and which generates statistical results protocols and/or individual results protocols relating to at least one of the participants.

12. Method according to one of claims 9 to 10, **characterised in that** speech signals evaluated by the emitting device are at least temporarily stored in a memory device and **in that** a computer unit is provided which accesses the speech signals stored in the memory device and which generates statistical results protocols and/or individual results protocols relating to at least one of the participants.

13. Method according to one of claims 8 to 11, **characterised in that** the reference speech signals are or may be processed and **in that** speech signals emitted are automatically linked to characterising data of at least one of the participants.

14. Method according to one of claims 9, 10 and 12, **characterised in that** the reference speech signals are or may be processed and **in that** speech signals that have been evaluated are automatically linked to characterising data of at least one of the participants.

## Revendications

1. Système servant à la mesure de la qualité d'au moins une discussion entre au moins deux abonnés, sachant que la discussion est menée dans un réseau de communication par l'intermédiaire au moins d'une liaison de communication, présentant : un dispositif de conversion servant à convertir des signaux vocaux analogiques en signaux vocaux numériques ; un dispositif de détection servant à reconnaître/détecter des signaux vocaux de référence prédéfinis à partir des signaux vocaux numériques, comportant un dispositif comparateur servant à comparer les signaux vocaux numériques et les signaux vocaux de référence, qui sont enregistrés dans au moins un dispositif de stockage, et servant à déterminer des concordances entre des signaux vocaux numériques et des signaux vocaux de référence ; et un dispositif d'émission servant à émettre des signaux vocaux concordants déterminés ; ainsi qu'un dispositif de détection du temps servant à déterminer la durée de la discussion menée, **caractérisé en ce que** le dispositif de détection du temps est réalisé afin de combiner les signaux vocaux concordants déterminés et des repères temporels, sachant que les repères temporels sont placés en fonction du début de la discussion.

2. Système selon la revendication 1, **caractérisé en ce que** sont prévus en complément un dispositif d'analyse aux fins de l'évaluation quantitative des signaux vocaux concordants déterminés et/ou un dispositif d'analyse aux fins de l'évaluation qualitative des signaux vocaux concordants déterminés.

3. Système selon la revendication 2, **caractérisé en ce que** le dispositif d'émission est réalisé pour émettre des signaux vocaux concordants évalués d'un point de vue quantitatif et/ou qualitatif, et/ou **en ce que** le dispositif d'émission est réalisé pour émettre des signaux vocaux concordants pourvus de repères temporels.

4. Système selon l'une quelconque des revendications 1 à 3, **caractérisé en ce qu'**un dispositif de stockage est prévu pour mettre en mémoire au moins temporairement les signaux vocaux émis par le dispositif d'émission, et **en ce qu'**une unité de calcul est prévue, laquelle accède aux signaux vocaux stockés dans le dispositif de stockage et est réalisée pour établir des procès-verbaux succincts statistiques et/ou des procès-verbaux succincts individuels concernant au moins un des abonnés.

5. Système selon l'une quelconque des revendications 2 à 3, **caractérisé en ce qu'**un dispositif de stockage est prévu pour mettre en mémoire au moins temporairement les signaux vocaux évalués par le dispositif d'émission, et **en ce qu'**une unité de calcul est prévue, laquelle accède aux signaux vocaux stockés dans le dispositif de stockage et est réalisée pour établir des procès-verbaux succincts statistiques et/ou succincts individuels concernant au moins un des abonnés.

6. Système selon l'une quelconque des revendications 1 à 4, **caractérisé en ce que** le système présente des moyens servant à traiter les signaux vocaux de référence, et/ou **en ce que** des moyens sont prévus pour combiner automatiquement des signaux vocaux émis avec des données caractérisantes d'au moins un des abonnés.

7. Système selon l'une quelconque des revendications 2, 3 et 5, **caractérisé en ce que** le système présente des moyens servant au traitement des signaux vocaux de référence, et/ou **en ce que** des moyens sont prévus pour combiner automatiquement des signaux vocaux évalués avec des données caractérisantes d'au moins un des abonnés.

8. Procédé servant à mesurer la qualité d'au moins une discussion entre au moins deux abonnés, sachant que la discussion est menée dans un réseau de communication par l'intermédiaire au moins d'une liaison de communication, sachant que des signaux vocaux analogiques sont convertis dans un dispositif de conversion en des signaux vocaux numériques,
sachant que des signaux vocaux de référence prédéfinis sont reconnus/détectés à partir de signaux vocaux numériques dans un dispositif de détection, sachant que des signaux vocaux numériques sont comparés dans un dispositif comparateur à des signaux vocaux de référence, lesquels sont enregistrés dans au moins un dispositif de stockage, et sachant que des concordances entre des signaux vocaux numériques et des signaux vocaux de référence sont déterminées,
sachant que les signaux vocaux concordants déterminés sont émis dans un dispositif d'émission,
et sachant que la durée de la discussion menée est déterminée dans un dispositif de détection du temps,
**caractérisé par** l'étape suivante consistant en ce que :
les signaux vocaux concordants déterminés sont combinés à des repères temporels dans le dispositif de détection du temps, sachant que les repères temporels sont placés en fonction du début de la discussion.

9. Procédé selon la revendication 8, **caractérisé en ce qu'**en complément sont prévus un dispositif d'analyse dans lequel une évaluation quantitative des signaux vocaux concordants déterminés est effectuée, et/ou un dispositif d'analyse dans lequel une évaluation qualitative des signaux vocaux concordants déterminés est effectuée.

10. Procédé selon la revendication 9, **caractérisé en ce que** le dispositif d'émission émet des signaux vocaux concordants évalués d'un point de vue quantitatif et/ou qualitatif, en particulier émet des signaux vocaux concordants pourvus de repères temporels.

11. Procédé selon l'une quelconque des revendications 8 à 10, **caractérisé en ce que** des signaux vocaux émis par le dispositif d'émission sont enregistrés au moins temporairement dans un dispositif de stockage, et **en ce qu'**une unité de calcul est prévue, laquelle accède aux signaux vocaux stockés dans le dispositif de stockage et établit des procès-verbaux succincts statistiques et/ou succincts individuels concernant au moins un des abonnés.

12. Procédé selon l'une quelconque des revendications 9 à 10, **caractérisé en ce que** des signaux vocaux évalués par le dispositif d'émission sont mis en mémoire au moins temporairement dans un dispositif de stockage, et **en ce qu'**une unité de calcul est prévue, laquelle accède aux signaux vocaux stockés dans le dispositif de stockage et/ou établit des procès-verbaux succincts statistiques et/ou succincts individuels concernant au moins un des abonnés.

13. Procédé selon l'une quelconque des revendications 8 à 11, **caractérisé en ce que** les signaux vocaux de référence sont traités ou peuvent être traités, et **en ce que** des signaux vocaux émis sont combinés automatiquement à des données caractérisantes d'au moins un des abonnés.

14. Procédé selon l'une quelconque des revendications 9, 10 et 12, **caractérisé en ce que** les signaux vocaux de référence sont traités ou peuvent être traités, et **en ce que** les signaux vocaux évalués sont automatiquement combinés à des données caractérisantes d'au moins un des abonnés.
